# EUROPÄISCHE PATENTSCHRIFT

(11) **EP 1 069 731 B1**
(45) Veröffentlichungstag und Bekanntmachung des Hinweises auf die Patenterteilung: **05.04.2006**
(21) Anmeldenummer: 00112933.7
(22) Anmeldetag: 20.06.2000
(51) Int. Cl.: H04L 12/40, B60R 16/02

(54) **Netzwerk und Verfahren zum Austausch von Botschaften**
Network and procedure to exchange messages
Réseau et procédé pour l'échange de messages

(30) Priorität: 14.07.1999 US 354345
(43) Veröffentlichungstag der Anmeldung: 17.01.2001
(73) Patentinhaber: DEERE & COMPANY, Moline, Illinois 61265-8098 (US)
(72) Erfinder: Smart, David Charles, Waterloo, IA 50701 (US); Kitchen, Jerry Norman, Cedar Falls, IA 50613 (US); Yoder, Jeremy T., Cedar Rapids, IA 52402 (US)
(74) Vertreter: Holst, Sönke

(56) Entgegenhaltungen:
- EP-A- 0 581 033
- DE-A- 4 110 372
- ETSCHBERGER K ET AL: "VOM AUTO IN DIE INDUSTRIE" ELEKTRONIK, FRANZIS VERLAG GMBH. MUNCHEN, DE, Bd. 39, Nr. 12, 8. Juni 1990 (1990-06-08), Seiten 109-114, XP000128165 ISSN: 0013-5658

## Beschreibung

Die Erfindung betrifft ein Netzwerk und ein Verfahren zum Austausch von Botschaften.

Moderne Nutz- oder Landwirtschaftsfahrzeuge umfassen in der Regel ein Netzwerk elektronischer Steuereinheiten (ECUs, Electronic Control Units), wie eine Motorsteuerungs-Steuereinheit, eine Getriebesteuerungs-Steuereinheit, eine Armaturenbrettinstrumenten-Steuereinheit, etc. Das Netzwerk kann durch das ganze Fahrzeug verlaufen, um zu ermöglichen, die verschiedenen elektronischen Steuereinheiten in der Nähe des Subsystems anzuordnen, mit dem sie zusammenwirken. Eine Vielzahl von Datenbotschaften werden regelmäßig durch das Netzwerk geschickt, von denen jede einzelne Botschaft nur für einige elektronische Steuereinheiten Bedeutung haben kann. Beispielsweise kann die Motorsteuerungs-Steuereinheit der elektronischen Steuereinheit der Anzeige eine Information über die Geschwindigkeit der Maschine bereitstellen, jedoch wird eine elektronische Steuereinheit, die das Beleuchtungssystem des Fahrzeugs steuert, keinen Bedarf an Informationen über die Geschwindigkeit des Motors haben. Jede elektronische Steuereinheit umfasst in der Regel einen Satz an elektronischen Chips, der einen Mikroprozessor (CPU, Central Processing Unit) und Netzwerkbetriebshardware (CAN, Controller Area Network) aufweist.

Es gibt anwendbare Netzwerkprotokoll-Standards (SAE-J1939 und ISO-11783), die die Kommunikation von Botschaften in einem derartigen Netzwerk reglementieren. Unter dem J1939-Standard weisen Botschaften einen Botschafts-Identifizierer auf. Botschafts-Identifizierer sind eine Hintereinanderreihung mehrerer Felder, einschließlich: (i) Priorität - 3 bits; (ii) Parametergruppennummer (PGN) - 16 bits; (iii) Bestimmungsadresse (DA, Destination Address) - 8 bits; (iv) Quell-Adresse (SA, Source Address) - 8 bits; und (v) andere - 2 bits. Daher kombinieren sich diese Felder zu einem Botschafts-Identifizierer mit 29 bits.

Das Prioritäts-Feld ermöglicht den Botschaften mit hoher Priorität (Vorrang) einen bevorzugten Zugang zum Netz zu bekommen, vor Botschaften mit niedrigerer Priorität. Das Parametergruppennummern-Feld (PGN) wird für individuelle Parameter verwendet, um einen effizienteren Transport im Netzwerk zu erzielen. Ein Beispiel ist das Kombinieren von Motorgeschwindigkeit und Motordrehmoment in einer Netzwerkbotschaft. Eine andere Gruppe könnte Fahrtrichtungssignalschalter und andere Signale des "Höflichkeits-"Typs umfassen. Jeder Gruppe ist eine Nummer zugeordnet. Außerdem gibt es einige Werte der Parametergruppennummern-Felder, bei denen der Zweck ist, eine direkte Kommunikation von einer elektronischen Steuereinheit zur anderen zu ermöglichen. In diesem Fall ist ein Teil der Parametergruppennummern-Felder die Bestimmungsadresse. Das Bestimmungsadressen-Feld (DA) enthält die einzigartige Adressennummer, die jeder elektronischen Steuereinheit (ECU) im Netzwerk zugeordnet ist. Da jede elektronische Steuereinheit eine einzigartige Nummer aufweist, kann eine elektronische Steuereinheit direkt mit einer anderen elektronischen Steuereinheit kommunizieren, unter Verwendung eines besonderen Bereichs der Parametergruppennummern, die diesem Zweck zugeordnet sind. Das Quell-Adressen-Feld (SA) wird für die einzigartige Nummer benutzt, die jeder elektronischen Steuereinheit zugeordnet ist, so dass die Ursprungs-Steuereinheit (ECU) jeder Botschaft im Netzwerk identifiziert werden kann. Die "anderen" Felder sind für Zukunftszwecke reserviert.

In vielen Fällen wird eine Botschaft unter dem J1939-Protokoll vordefinierte Parametergruppennummern (PGN) haben, die allgemeinen Parametern wie Motorgeschwindigkeit, Öldruck, Fahrtrichtungssignalschaltern usw. entsprechen. Viele neue elektronische Steuereinheiten weisen Parameter auf, die nicht vor-definiert sind. J1939 erlaubt auch ein "proprietary messaging", also ein eigentümerdefiniertes Übertragen von Botschaften, wobei für bestimmte Werte der Parametergruppennummern die Spezifikation, welche Daten in der jeweiligen PGN übertragen werden, den Entwicklern überlassen ist und nicht im J1939-Standard erscheinen wird. Wenn neue Systeme geschaffen werden, ist es üblich, Prototypen dieser Systeme unter Verwendung der eigentümerdefinierten Botschaften zu erstellen. Wenn ein Bedarf besteht, neue Parameter in das Netzwerk einzustellen, wie beispielsweise "Höhe der Radio-Antenne", würde eine entsprechende vor-definierte Parametergruppennummer nicht in der gegenwärtigen J1939-Datenbank aufgefunden werden. Das System würde daher mit einem Prototyp erstellt, in dem die eigentümerdefinierten Botschaften verwendet werden, um den Parameter "Höhe der Radio-Antenne" zu kommunizieren. Eventuell könnte eine PGN für einen derartigen Parameter definiert werden, jedoch ist dazu eine lange Vorlaufzeit von vielen Monaten bis zu über einem Jahr hin erforderlich.

Um diese Protokolle zu unterstützen, muß eine extensive Menge von Netzwerkbotschaften unterstützt werden. Jede von einem Mikroprozessor einer elektronischen Steuereinheit empfangene Botschaft muss ihren Botschafts-Identifizierer prüfen lassen, um festzustellen, ob diese Botschaft für die jeweilige Steuereinheit relevant ist. Bei elektronischen Steuereinheiten, die nur mit einer kleinen Menge von Botschaften umgehen müssen, hat die allgemein verfügbare CAN-Netzwerkhardware eine eingebaute Filterung, die diesen Test durchführen kann, so dass dabei automatisch eingehende Botschaften, die von Interesse sind, akzeptiert werden, während andere Botschaften zurückgewiesen werden, ohne Eingreifen des Mikroprozessors der elektronischen Steuereinheit (ECU). Eine typische Steuereinheit in einem derartigen Netzwerk muss jedoch eine viel größere Menge an Botschaften verarbeiten, als die eingebauten Hardware-Filter handhaben können, und daher muss die Annahme bzw. Zurückweisung von Botschaften in der Software des Systems (ECU) erfolgen.

Bei einem komplexen neuen System können mehrere zehn oder sogar hunderte neuer Parameter vorhanden sein. Bei einem derartigen System sind diese Parameter in den PGNs für "proprietary messaging"eingeordnet. Es wäre jedoch denkbar, dass diese Gruppe von Parametergruppennummern nicht die Kapazität für alle der neuen Parameter aufweist. Daher ist es relativ gebräuchliche Praxis, ein Datenbyte in der eigentümerdefinierten Botschaft zu verwenden, um den Zweck der spezifischen Botschaft weiter zu beschreiben. Die Verwendung eines Datenbytes stellt 8 bits und daher 256 zusätzliche einzigartige Kombinationen bereit, die eine Assoziation jeweiliger Parameter mit entsprechenden Parametergruppennummern ermöglichen.

Wenn die Funktion der Annahme und Zurückweisung von Botschaften von der Software des Systems durchgeführt wird, wird die Belastung der CPU wesentlich vergrößert, möglicherweise so weit, dass Gefahr besteht, dass Aktivitäten niedrigerer Priorität, die nicht mit dem Netzwerk in Beziehung stehen, nicht rechtzeitig ausgeführt werden. Um dieses Problem zu lösen, können wesentlich leistungsstärkere CPUs oder andere zusätzliche elektronische Hardware erforderlich werden. Jedes dieser Erfordernisse würde die Kosten des Systems signifikant vergrößern.

Botschafts-Identifizierer sind 29 bits lang, und in einigen Fällen von Botschafts-Identifizierern kann die Prüfung eines oder mehrerer Daten-Bytes nötig werden, um die Relevanz der Botschaft für eine gegebene elektronische Steuereinheit festzustellen. Eine Verwendung konventioneller Lookup-Tabellen-Methode ist nicht praktikabel, da die Tabelle mehr als 2²⁹ Einträge erfordern kann, und wenn zusätzlich eines der Daten-Bytes erforderlich ist, um die Relevanz einer gegebenen Botschaft zu prüfen, wären 2³⁷ Einträge nötig. Außerdem passen für eine jeweilige elektronische Steuereinheit- relevante Botschafts-Identifizierer nicht in einen Adressierungsraum mit hinreichender Wiederholungsfrequenz, so dass eine effiziente mathematische Formel verwendet werden könnte.

Es ist davon auszugehen, dass typische Netzwerke aus gegenwärtiger Produktion ein Verfahren mit zwei Schritten anwenden, wobei zunächst in einem Prozess hoher Priorität die Botschaften detektiert und herausgeladen werden, und anschließend die Botschaften in einem Prozess mit niedrigerer Priorität verarbeitet werden. Die Ausführung dieses Verfahrens ist zeitaufwändig, wenn viele Botschaften im System keine Relevanz für eine spezielle elektronische Steuereinheit oder einen Knoten haben. Beispielsweise stellt eine Interruptdienstroutine (ISR, interrupt service routine), die eine neue Botschaft beantwortet, die Botschaft zur späteren Prüfung in eine Schlange. Wenn die Botschaft nicht relevant ist, wird diese Verarbeitungszeit verschwendet. Konventionelle Verfahren zum Feststellen der Relevanz einer Botschaft erfordern in der Interruptdienstroutine zu viel Zeit. Ein anderes Beispiel verschwendeter Verarbeitungszeit ist ein Prozess niedrigerer Priorität, der periodisch Botschaften aus der Schlange entfernt und sie mit der Liste erwünschter Botschaften dahingehend vergleicht, ob die Botschaften relevant sind oder nicht.

Im einzelnen ist die typische Prozedur zur Verarbeitung einer CAN-Netzwerkbotschaft wie folgt:

Eine Netzwerkbotschaft kommt im CAN-Subsystem der elektronischen Steuereinheit an. Dadurch wird die CPU über einen Interrupt alarmiert. Das normale Datenverarbeiten wird unterbrochen und die Interruptdienstroutine (ISR) übernimmt, um die Botschaft aus dem CAN-Subsystem herauszuziehen und sie in eine Schlange zur weiteren Verarbeitung zu stellen. Diese Software ist oft sehr straff gestaltet, um die Auswirkungen auf andere Aktivitäten des Systems zu minimieren und es ist nicht erkennbar, wie die Botschaften in dieser Interruptdienstroutine (ISR) zu filtern sind, ohne dem System extensive Resourcen zuzufügen. Die CPU kehrt wieder zur Steuerung des zuvor aktiven Prozesses zurück. Zu einem günstigeren Zeitpunkt prüft die CPU die Schlange, ob irgendwelche Botschaften vorhanden sind. Wenn eine oder mehrere Botschaften vorhanden sind, werden sie individuell geprüft, um ihre Relevanz für diese elektronische Steuereinheit im Netzwerk festzustellen. Diese Prüfung wird in der Regel derart durchgeführt, dass der einzigartige Botschafts-Identifizierer dieser Botschaft mit einer Liste bekannter Identifizierer verglichen wird, die relevante Botschaften repräsentieren. Wenn die neue Botschaft zu einer Botschaft von Interesse passt, wird diese Botschaft vom System verarbeitet. Wenn die neue Botschaft nicht passt, nachdem der Botschafts-Identifizierer erschöpfend mit allen bekannten, relevanten Identifizierern verglichen wurde, wird diese Botschaft zurückgewiesen. Dieser Prozess wird wiederholt, bis eine gewisse Grenze erreicht ist. Diese Grenze kann eine leere Schlange, eine Zeitdauer, oder eine Anzahl an Botschaften sein. Die CPU führt andere Aufgaben aus, und wiederholt diese Prozedur an einem bestimmten zukünftigen Zeitpunkt.

Bei einem derartigen System führt die Interruptdienstroutine (ISR) einen festen Betrag an Arbeit aus, die etwa 60 Mikrosekunden CPU-Zeit erfordert. Der Botschaftsprozessor rastert die Liste bewerteter Botschaften ab, was etwa 100 Mikrosekunden CPU-Zeit erfordert, um die Liste erschöpfend abzusuchen. Wegen des großen Bereichs an Werten für den Botschafts-Identifizierer gibt es keine schnell identifizierbaren Optimierungen, die die Suche beschleunigen können, so dass sie in der Regel eine lineare Suche ist. Wenn die Länge der Liste vergrößert wird, steigt die Zeit zum Durchsuchen der Liste proportional. Wenn in der Liste eine Botschaft gefunden wird, wird die Botschaft dann dekodiert. Eine typische elektronische Steuereinheit könnte weniger als 20 % der Botschaften für sich relevant finden. Für jede Botschaft ohne Relevanz verbraucht die CPU etwa 160 Mikrosekunden.

Die DE 41 10 372 A beschreibt ein Multiplex-Übertragungssystem für Fahrzeuge, bei dem eine Vielzahl von Netzwerken über einen Netzknoten miteinander verbunden sind. An das Netzwerk angeschlossene Steuergeräte tauschen über das Netzwerk Daten aus, wobei anhand der Identitätsinformation der einzelnen Botschaften in nicht näher erläuterter Weise erkannt wird, welchem Steuergerät eine Botschaft adressiert ist.

Die EP 0 581 033 A beschreibt ein anderes Datenübertragungssystem. Von über eine Netzwerkleitung an eine Steuereinheit übertragenen Daten werden die Identitätscodes extrahiert und jeweils mit vorbestimmten Codes verglichen. Hier ist zwar eine schnelle Erkennung der der Steuereinheit zugeordneten Daten möglich, jedoch mit hohem hardwaremäßigem Aufwand und der Problematik, dass weitere Codes nur problematisch zugefügt werden können.

Die der Erfindung zugrunde liegende Aufgabe wird darin gesehen, eine schnellere Methode zur Verarbeitung und Feststellung der Relevanz von Netzwerk-Botschaften bereitzustellen, die mit preiswerteren CPUs verwendbar ist, die Botschaften ohne Relevanz zurückweist und die auch bei Bedingungen hoher Auslastung des Netzwerks mit Botschaften arbeitet.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird eine schnelle mathematische Operation mit dem jeweiligen (einzigartigen) Identifizierer der Botschaft, die durch das Netzwerk übersandt wurde, durchgeführt. Diese Operation gibt einen kleinen Adress-Wert zurück, der zum Nachschlagen in einer relativ kleinen Nachschlage-Tabelle mit Indexwerten dient, die einen Relevanzwert für jeden Indexwert enthält. Die Tabelle gibt eine 1 (oder einen Nicht-Null-Wert) für Indexwerte zurück, die relevanten Botschaften entsprechen, und eine Null für irrelevante Botschaften. Relevante Botschaften werden akzeptiert und weiter verarbeitet. Letzteres geschieht vorzugsweise, indem sie zunächst in eine Warteschlange in einem RAM-Puffer gestellt werden. Irrelevante Botschaften werden zurückgewiesen (d. h. ignoriert oder gelöscht). Diese Implementation ist effizient und schnell genug, als Teil einer Interruptdienstroutine ausgeführt zu werden. Als mathematische Operation kommt insbesondere eine Teilerreste-Operation in Frage, obwohl auch beliebige andere Operationen verwendbar sind, beipielsweise solche, die zur Berechnung von Prüfziffern (z. B. für Kontonummern) verwendet werden.

Eine sorgfältige Auswahl der arithmetischen Funktion und der Größe der Tabelle stellt ein System bereit, das keine zusätzliche Hardware zum Filtern der Botschaften erfordert. Wenn die Botschaft nicht relevant ist, wird sie nicht in die Schlange gestellt und die Interruptdienstroutine wird beendet, was eine beträchtliche Zeit in der Interruptdienstroutine selbst einspart. Nur Botschaften, die das "Filtern" in der Interruptdienstroutine passieren, werden in der Schlange gespeichert und eventuell mit einer Liste gewünschter (relevanter) Botschaften verglichen. Wenn die Botschaft von der Interruptdienstroutine zurückgewiesen wurde, wird in diesem zweiten Verfahrensschritt keine Zeit für diese Botschaft benötigt. Im Vergleich zu einer typischen linearen oder binären Suchroutine, die im zweiten Verfahrensschritt verwendet werden könnte, spart dieses Verfahren eine beträchtliche Menge an CPU-Zeit, die für andere Verarbeitungszwecke benutzt werden kann.

Das erfindungsgemäße Netzwerk kann insbesondere in landwirtschaftlichen Fahrzeugen eingesetzt werden.

In den Zeichnungen ist ein nachfolgend näher beschriebenes Ausführungsbeispiel der Erfindung dargestellt. Es zeigt:
- Fig. 1: ein vereinfachtes schematisches Blockdiagramm eines Netzwerk eines Fahrzeugs mit einer Vielzahl elektronischer Steuereinheiten (ECUs);
- Fig. 2: ein schematisches Diagramm, in dem ein Empfang von Botschaften gemäß der vorliegenden Erfindung gezeigt ist;
- Fig. 3: ein logisches Flussdiagramm, in dem ein erfindungsgemäßer Botschaftsempfangs- oder Filterabschnitt dargestellt ist; und
- Fig. 4: ein logisches Flussdiagramm, in dem ein Botschaftsverarbeitungsabschnitt gemäß der vorliegenden Erfindung dargestellt ist.

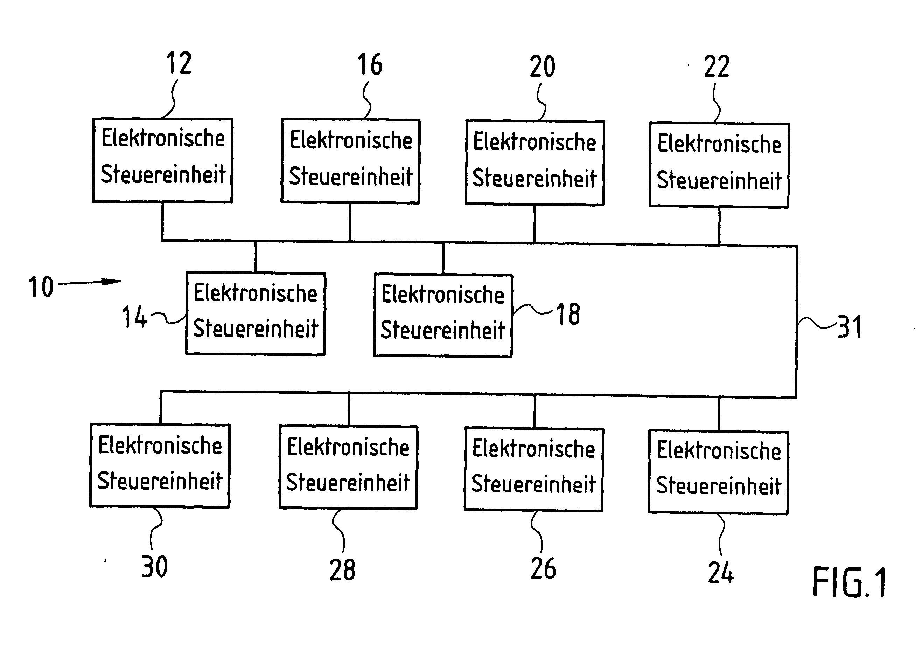

In Figur 1 ist ein CAN-Netzwerk 10 eines Fahrzeugs dargestellt, das eine Vielzahl an elektronischen Steuereinheiten (ECUs) 12-30 umfasst (zehn werden gezeigt, jedoch kann die vorliegende Erfindung in Verbindung mit mehr oder weniger ECUs verwendet werden), die durch einen CAN-Bus 31 untereinander verbunden sind.

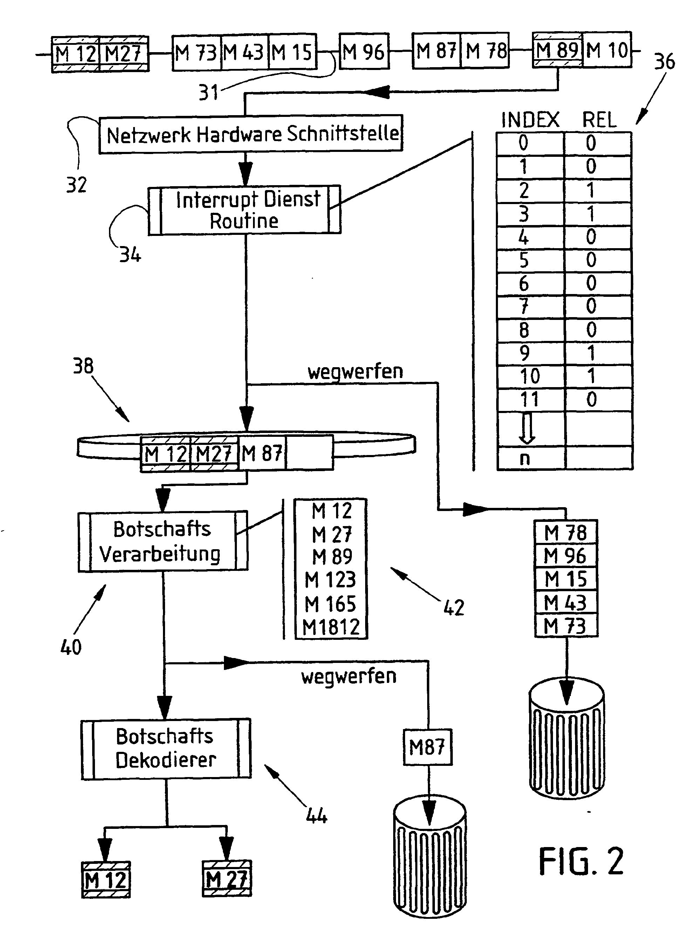

In der Figur 2 überträgt der Bus 31 Botschafts-Verkehr, der beispielsweise - bezüglich einer speziellen ECU - aus relevanten Botschaften M12, M27 und M89 (schattiert) und irrelevanten Botschaften M73, M43, M15, M96, M87, M78 und M10 (nicht schattiert) besteht. Jede Botschaft umfasst einen Identifizierer-Abschnitt und einen Daten-Abschnitt. Da diese Netwerk-Botschaften periodisch von anderen ECUs abgesandt und von einer ECU empfangen werden, werden sie wie folgt verarbeitet: Eine Netzwerk-Hardwareschnittstelle 32 auf der ECU empfängt eine Botschaft und startet eine Interruptdienstroutine (ISR) 34, die jegliche andere Datenverarbeitung durch die Software aussetzt.

Die Interruptdienstroutine 34 ist extrem kritischer Natur, da sie jede Aktivität niedrigerer Priorität in der ECU aussetzt. Gemäß der vorliegenden Erfindung berechnet ein Akzeptanzfilteralgorithmus einen Adress-Wert aus einem Adress-Schlüssel, d. h. einem Abschnitt des Botschafts-Identifizierers mit 29 bits. Die Berechnung des Adress-Werts wird durch den folgenden Pseudo-Code beschrieben:
Maskiere die Priorität und die "anderen" reservierten bits aus dem Identifizierer heraus,
Maskiere die Quell-Adresse (SA) heraus,
Wenn es eine eigentümerdefinierte Botschaft nach J1939 ist,
wird automatisch der Wert 1 des Bytes an die Stelle der Quell-Adresse kombiniert.
Dann wird die Adress-Berechnungs-Funktion durchgeführt.

### (Identifizierer : Byte 1) mod TeilerrestPrimzahl, oder wie der Pseudo-Code zeigt:

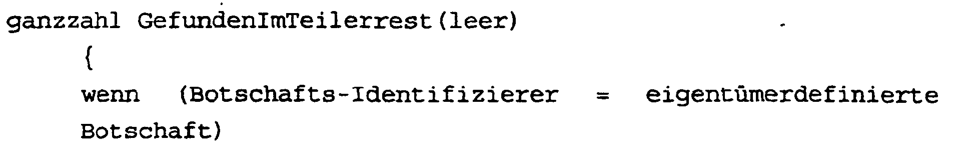

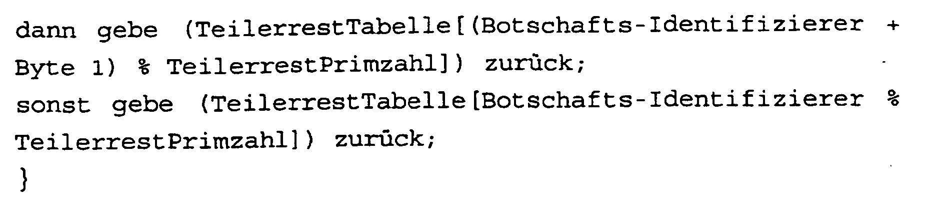

Der Adress-Wert (im Beispielsfall ein Teilerrest bezüglich einer (Prim-) Zahl, also ein Modulo-Wert) wird mit einem entsprechenden Satz an Indexwerten einer Adress-Tabelle oder einer Nachschlage-Tabelle 36 verglichen, wobei jeder Indexwert einen entsprechenden Relevanzwert, REL, aufweist, der 0 ist, falls er nicht relevant ist und 1 ist, falls er relevant ist. Der Adress-Wert kann vorzugsweise von 0 bis N reichen, wobei N vorzugsweise eine Primzahl ist, die die Anzahl an Indexwerten in der Nachschlage-Tabelle darstellt. Eine geeignet geschaffene Adress-Berechnungs-Funktion und Nachschlagetabelle mit einem geeigneten Wert für N reduziert die Anzahl irrelevanter Botschaften auf nahezu null. Botschaften, die den Test bestehen (mit einem REL-Wert von 1) werden in einen RAM-Puffer 38 geschoben, der in der Regel als First-In-First-Out-Puffer (FIFO) konfiguriert ist. Botschaften ohne Relevanz (REL-Wert von 0) werden von der jeweiligen ECU, die dieses Verfahren ausführt, ignoriert oder entsorgt.

Zu einem geeigneteren und wesentlich unkritischeren Zeitpunkt wird eine Botschaftsverarbeitungsdienstroutine 40 die Botschaften im Puffer 38 verarbeiten, wobei zuerst die älteste Botschaft genommen wird. Der Puffer 38 wird weit weniger Botschaften zum zusätzlichen Verarbeiten enthalten. Die Botschaftverarbeitungsdienstroutine 40 vergleicht die Botschaftsidentifizierer (M12, M27, etc.) mit einer gespeicherten Liste 42 bewerteter Botschaften. Wenn die neue Botschaft in der Liste 42 auftaucht, wird die Routine 40 mit dem Dekodieren fortfahren und bei 44 Daten aus der Botschaft extrahieren. Wenn die Routine 40 feststellt, dass die neue Botschaft nicht in der Liste 42 erscheint, wird sie die Botschaft ignorieren. Die Routine 40 kann dann entweder beendet werden, oder sie kann wieder anfangen, indem sie die nächste Botschaft im Puffer 38 betrachtet.

Bei diesem Verfahren führt die Interruptdienstroutine (ISR) einen variablen Betrag an Arbeit aus, der etwa 60 Mikrosekunden CPU-Zeit erfordert, wenn die Botschaft akzeptiert wird, aber nur 25 bis 30 Mikrosekunden CPU-Zeit, wenn die Botschaft zurückgewiesen wird. Die Botschaftsverarbeitungsroutine 40 rastert die Liste 42 bewerteter Botschaften ab, was ungefähr 100 Mikrosekunden an CPU-Zeit erfordert, um die Liste 42 erschöpfend durchzusuchen. Die verarbeiteten Botschaften sind hauptsächlich Botschaften mit Wert für diesen Knoten. Eine zweckmäßige Auswahl des Adress-Berechnungs-Filters wird die Botschaften ohne Interesse auf nahezu null reduzieren. Wenn die Länge der Liste 42 vergrößert wird, wird die Zeit zum Durchrastern der Liste vergrößert.

Wenn eine Botschaft in der Liste 42 gefunden wird, wird die Botschaft anschließend dekodiert. Bei einem typischen System wird ungefähr 80 % der Botschaften für eine konkrete elektronische Steuereinheit nicht relevant sein, und ein großer Prozentsatz von ihnen wird von der Interruptdienstroutine (ISR) 34 zurückgewiesen werden, so dass ein beträchtlicher Betrag an CPU-Verarbeitungszeit eingespart wird, die dann zur Ausführung anderer Funktionen benutzt werden kann.

Mit Bezug zur Figur 2, und insbesondere auf die Adress-Tabelle 36 ist anzumerken, dass die Adress-Tabelle 36 es erlaubt, alle Identifizierer von Interesse durch das System verarbeiten zu lassen, während nahezu alle Identifizierer, die nicht von Interesse sind, zurückgewiesen werden. Als Ergebnis der Erfindung wird die Gesamtleistungsfähigkeit von der Qualität der verwendeten Adress-Tabelle dominiert. Eine sehr große Adress-Tabelle, die aus 2²⁹ Einträgen zusammengesetzt ist, wird ein Zurückweisen aller für eine gegebene CPU nicht relevanter Identifizierer erlauben. Da ein Speicher derartiger Größe jedoch nicht ökonomisch ist, könnte eine gebräuchlichere Adress-Tabelle eine Größe von 256 bis 2048 Einträgen aufweisen.

Wenn die Größe der Adress-Tabelle reduziert wird (kleiner als 2²⁹ Einträge), wird ein gewisser Prozentsatz von Identifizierern für eine gegebene Adress-Berechnungs-Funktion zum Errechnen des selben Adress-Werts führen. Botschaften mit dieser Eigenschaft haben denselben Relevanz-Wert, und wenn irgendeine dieser Botschaften relevant ist, werden daher alle von der Interruptdienstroutine als relevant identifiziert. Die wirklich nicht relevanten werden trotzdem verarbeitet und von der Botschaftsverarbeitungsroutine 40 zurückgewiesen, wenn kein passender Identifizierer in der Liste 42 gefunden wird. Daher wird die Auswahl einer geeignet dimensionierten Adress-Tabelle und einer geeigneten arithmetischen Transformation (in diesem Beispiel: Wahl des Teilerrest-Teilers) ein System zum Ergebnis haben, das alle Botschaften von Interesse behält und einen sehr hohen Prozentsatz von Botschaften ohne Interesse zurückweist. Der Teilerrest-Teiler kann in diesem Beispiel empirisch durch einen iterativen Prozess festgestellt werden, der eine Teilerreste-Operation (Modulo-Operation) auf den Identifizierer anwendet, wobei die Teilerreste-Operation Indexwerte für die Adress-Tabelle produziert. Beispielsweise wird ein Teilerrest-Teiler von 251 eine Adress-Tabelle mit 251 einzigartigen Indexwerten produzieren.

Die Erzeugung einer guten Adress-Tabelle und guter Teilerrest-Teiler erfordert eine Analyse der Menge an Botschaften, die im System vorhanden sind. Es ist wichtig zu erkennen, dass für eine gegebene Zeitperiode (ein Probenintervall) im Netzwerk I Botschaften existieren, die für die ausgewählte elektronische Steuereinheit (ECU) relevant sind, und dass T die Gesamtzahl der Botschaften im Netzwerk sein wird. Es wird eine Menge an Botschaften - J - existieren, die die elektronische Steuereinheit verarbeitet, die aber nicht relevant sind. Durch das Verwenden dieser Botschaftsmengen ist es möglich, durch verschiedene Kandidaten für Teilerrest-Teiler zu iterieren, um die Qualität des Lösungskandidaten festzustellen. Eine gute Lösung wird den kleinsten Betrag für J produzieren. Eine Probe über 60 Sekunden ist allgemein ein gutes Probenintervall, über das diese Information berechnet werden kann.

Eine geeignete Adress-Tabelle kann folgendermaßen generiert werden:
a. Liste alle Botschaften auf, die die ausgewählte elektronische Steuereinheit empfangen muss.
b. Für jede Botschaft den Identifizierer und die normale Wiederholungsrate dieser Botschaft auflisten.
c. Berechne die Anzahl des Auftretens dieser Botschaft über eine Probenzeit (60 Sekunden). Wenn die Botschaft normalerweise nicht gesendet wird, kann sich das Ergebnis null ergeben. Wenn das der Fall ist, setze die Anzahl des Auftretens auf 1. Diese Liste repräsentiert die Menge an Botschaften, die mit X identifiziert wird.
d. Erzeuge eine andere Liste aller verbleibenden Botschaften, die die ausgewählte elektronische Steuereinheit nicht empfangen muss. Berechne wieder die Anzahl des Auftretens wie oben dargestellt. Diese Liste repräsentiert die Menge als Y identifizierter Botschaften.
e. Erzeuge die Menge der Botschaften Z durch Kombinieren der Mengen X und Y. (Dies ist die Menge aller Botschaften, die in der Probenzeit im Netzwerk auftreten könnte.)

Die iterative Berechnung geht wie folgt vor:
a. Für jeden Teilerrest-Teiler-Kandidaten
b. Erzeuge eine Adress-Tabelle mit einer Größe, die dem Wert des Teilerrest-Teilers entspricht und initialisiere alle Einträge auf den Wert 0
c. Berechne den Adress-Wert für jeden Identifizierer in der Menge X. Markiere diesen Eintrag in der Tabelle mit einer 1, um anzuzeigen, dass jeder Identifizierer, der diesen Adress-Wert zum Ergebnis hat, empfangen wird.
d. Wenn alle Botschaften in der Menge X verarbeitet wurden, ist die Adress-Tabelle vollständig aufgebaut.

Um die Qualität dieser Tabelle zu evaluieren, verarbeite die Mengen X und Z folgendermaßen:
a. Initialisiere einen Zähler für die Botschaften von Interesse auf null - I
b. Initialisiere einen Zähler für die Botschaften, die den Teilerrest-Filter passieren, aber nicht erwünscht sind, auf null - J
c. Initialisiere einen Zähler für die gesamten Botschaften im Netzwerk auf null - T
d. Für jeden Identifizierer in der Menge X, Zähle das Auftreten zu I hinzu Zähle das Auftreten zu T hinzu
e. Für jeden Identifizierer in der Menge Y Berechne den Teilerrest (= Adress-Wert), siehe nach dem Relevanzwert, und
   wenn der Relevanzwert nicht null ist (Botschaft passiert den Filter), zähle das Auftreten zu J hinzu Zähle das Auftreten zu T hinzu

I+J gibt nun die gesamte Anzahl der empfangenen Botschaften wieder, und J/(I+J) gibt als Prozentsatz den Betrag an Netzwerk-"Lärm"wieder - unnötiger Arbeit als Ergebnis der Botschaften, die den Filter passieren.

Das kann auch als Prozentsatz der gesamten Botschaften als J/T ausgedrückt werden.

Wiederhole diesen Prozess für den nächsten Kandidaten als Teilerrest-Teiler, und nachdem der Prozess für alle vorgeschlagenen Teilerrest-Teiler durchgeführt wurde, wähle den Teilerrest-Teiler und somit die Adress-Tabelle aus, die die größte Anzahl an nicht-relevanter Botschaften zurückweist.

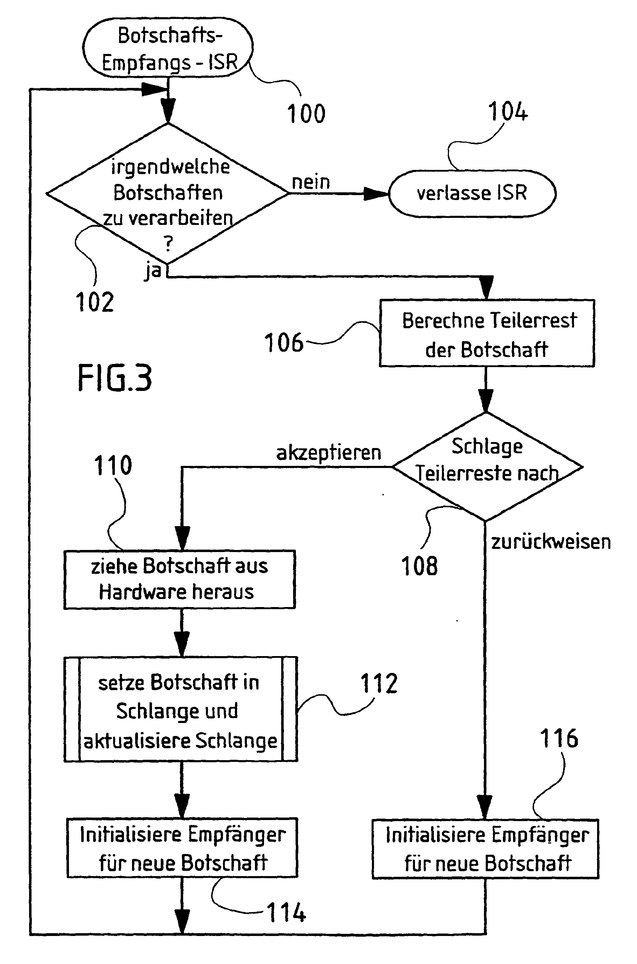

Es wird auf Figur 3 verwiesen, in der die Interruptdienstroutine (ISR) im Schritt 100 beginnt. Schritt 102 stellt fest, ob irgendwelche zu verarbeitenden Botschaften da sind oder nicht. Wenn nicht, wird die Routine im Schritt 104 verlassen. Wenn ja, berechnet Schritt 106 einen Teilerrest-Wert als Adress-Wert. In Schritt 108 wird der Teilerrest-Wert mit dem Indexwert in der Nachschlage-Tabelle 36 verglichen. Wenn die Nachschlage-Tabelle 36 anzeigt, dass die Botschaft nicht relevant ist, initialisiert Schritt 116 für den Empfang einer neuen Botschaft und die Routine kehrt zu Schritt 102 zurück.

Wenn die Nachschlage-Tabelle 36 anzeigt, dass die Botschaft relevant ist, zieht Schritt 110 die Botschaft aus dem Bus 31 heraus und Schritt 112 setzt die Botschaft in eine Schlange (im Puffer 38) und aktualisiert die Schlange. Schritt 114 initialisiert dann für den Empfang einer neuen Botschaft und die Routine kehrt zu Schritt 102 zurück.

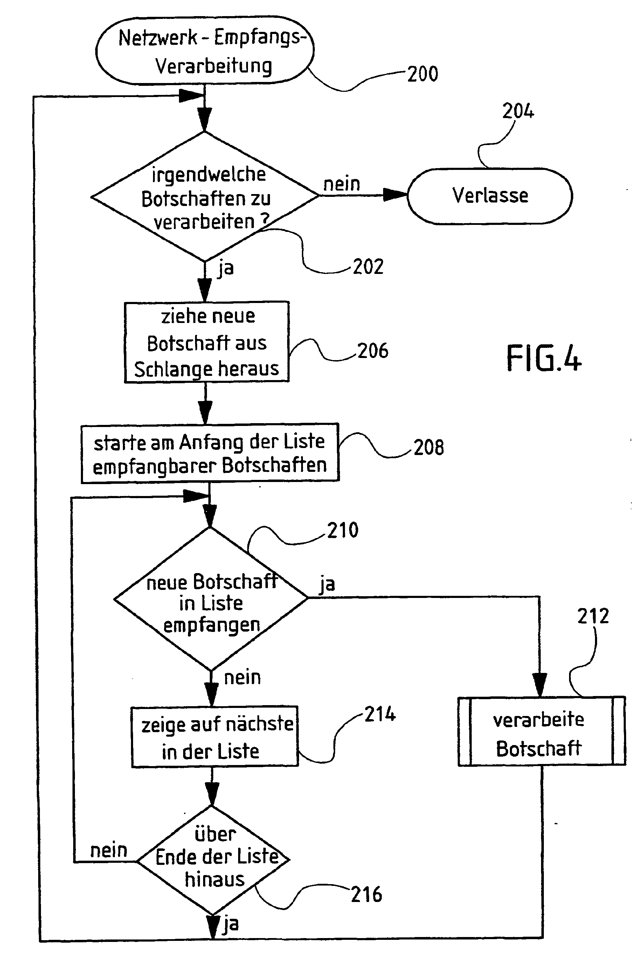

Es wird auf Figur 4 verwiesen, in der die Botschaftsverarbeitungsroutine 40 in Schritt 200 beginnt. Schritt 202 stellt fest, ob irgendwelche Botschaften zu verarbeiten sind oder nicht. Wenn nicht, wird die Routine bei 204 verlassen. Wenn ja, holt Schritt 206 die Botschaft aus der Schlange heraus (im Puffer 38). In Schritt 208 wird ein Listenindexwert derart gesetzt, dass er den ersten Wert in der gespeichterten Liste 42 von Identifizierern repräsentiert. Wenn dann in Schritt 210 der Identifizierer der aus der Schlange herausgeholten Botschaft zum ersten Wert in der gespeicherten Liste 42 passt, wird die Botschaft in Schritt 212 normal verarbeitet. Wenn der Identifizierer der aus der Schlange herausgeholten Botschaft nicht zum ersten Wert in der gespeicherten Liste 42 passt, erhöht Schritt 214 den Listenindexwert, so dass er den nächsten Wert in der Liste 42 repräsentiert. Wenn dann der Listenindexwert über den letzten Eintrag in der Liste 42 hinausgeht, bringt Schritt 216 die Routine zu Schritt 202 zurück. Anderenfalls bringt Schritt 216 die Routine zu Schritt 210 zurück, um festzustellen, ob der Identifizierer der extrahierten Botschaft zum nächsten Wert in der gespeicherten Liste 42 passt.

Die Interruptdienstroutine 34 ist die zeitkritische Routine und vollführt vorzugsweise möglichst wenig Verarbeitungen. Wenn die Interruptdienstroutine 34 eine Botschaft in die Schlange stellt, wird die Botschaftsverarbeitungsroutine 40 die Botschaften in dieser Schlange dann verarbeiten.

Das Folgende ist der Prgrammquellcode (Pseudocode) für die Routinen der Figuren 3 und 4.

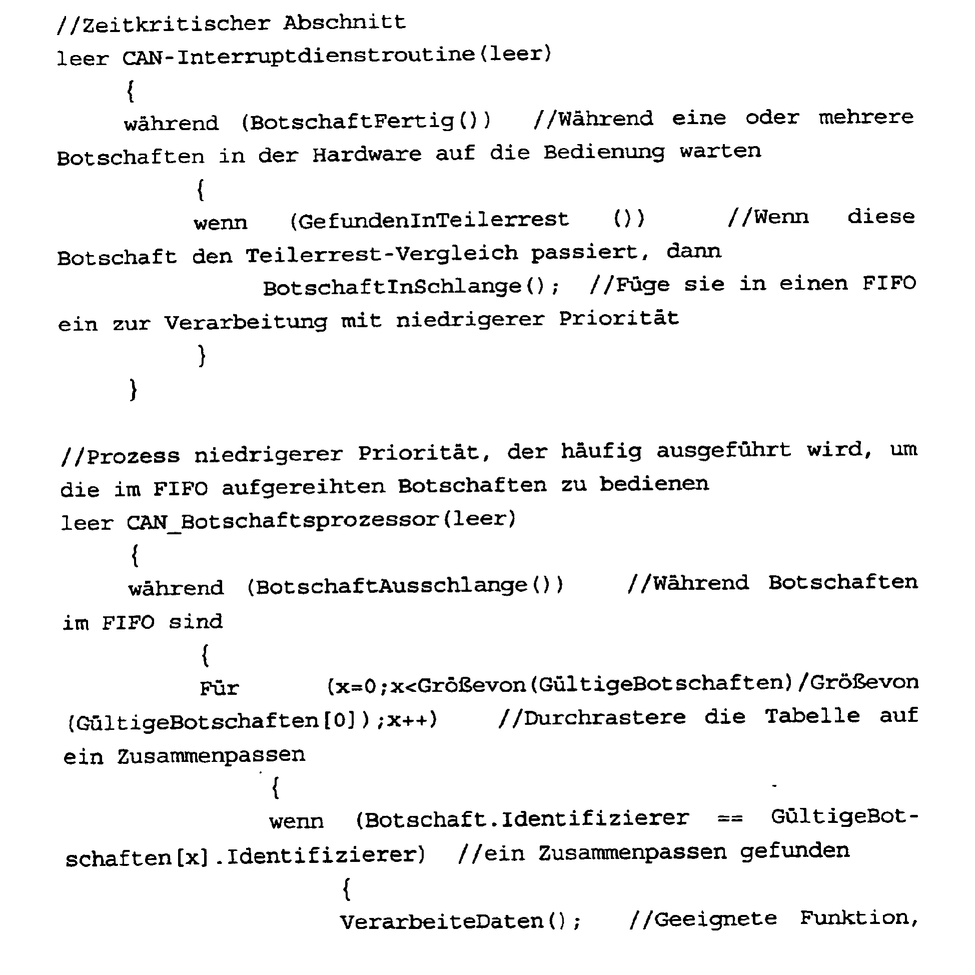

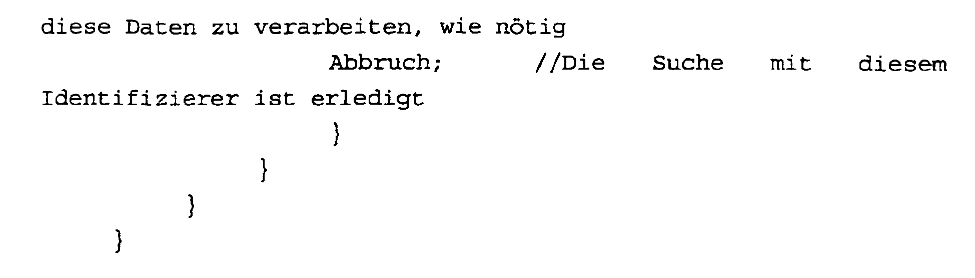

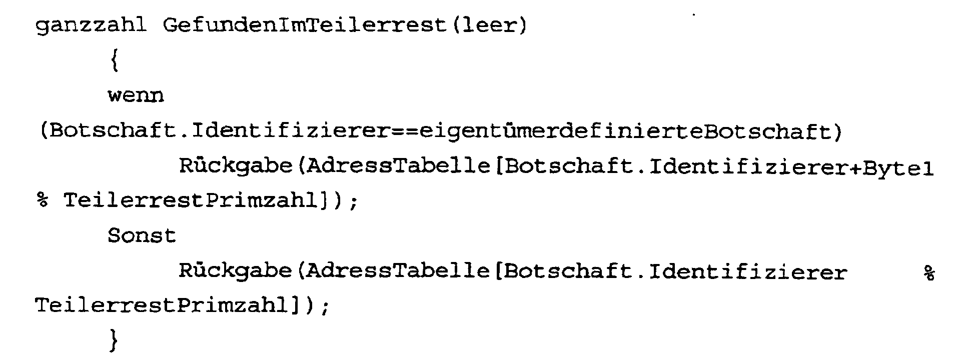

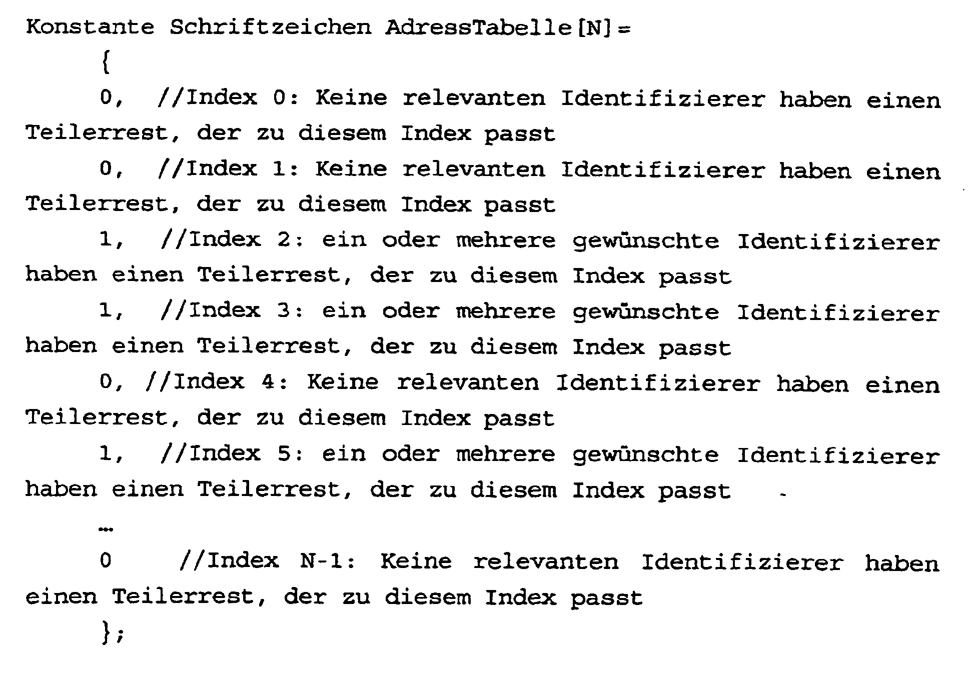

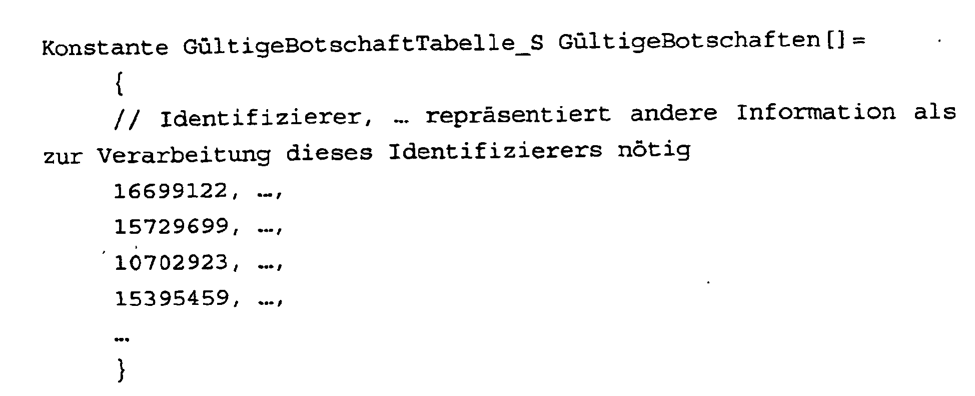

Ein Teil der vorliegenden Offenbarung enthält Material, das Gegenstand eines Anspruchs auf Urheberrechts-Schutz ist. Der Inhaber des Urheberrechts hat keine Einwände gegen Kopien dieses patentamtlichen Dokuments durch Dritte, behält sich jedoch alle anderen Rechte vor.

## Patentansprüche

1. Verfahren zum Austauschen von Botschaften in einem Netzwerk (10) mit einer Vielzahl elektronischer Steuereinheiten (12-30), die durch einen Bus (31) untereinander verbunden sind und Botschaften untereinander austauschen, die jeweils einen Abschnitt mit einem Identifizierer und Daten aufweisen, mit folgenden, von den elektronischen Steuereinheiten (12-30) durchgeführten Schritten: Empfangen einer Botschaft;
Umwandeln des Identifizierers der Botschaft in einen Adress-Wert, indem eine arithmetische Operation durchgeführt wird;
Herauslesen eines Relevanzwerts aus einer Tabelle (36), in der für eine Vielzahl von Index-Werten Relevanzwerte abgespeichert sind, wobei der Relevanzwert des Indexwerts, der dem jeweiligen Adress-Wert entspricht, aus der Tabelle (36) entnommen wird;
Ignorieren der Botschaft, wenn der entsprechende Relevanzwert anzeigt, dass die Botschaft für die betreffende elektronische Steuereinheit (12-30) nicht relevant ist;
Weiterverarbeiten der Botschaft, wenn der entsprechende Relevanzwert anzeigt, dass die Botschaft für die betreffende elektronische Steuereinheit (12-30) relevant ist.

2. Verfahren nach Anspruch 1, wobei die Botschaft in einen Speicherpuffer (38) eingespeichert wird, wenn der entsprechende Relevanzwert anzeigt, dass die Botschaft für die betreffende elektronische Steuereinheit (12-30) relevant ist, und in der Regel später weiter verarbeitet wird.

3. Verfahren nach Anspruch 2, wobei nur ausgewählte Botschaften aus dem Speicherpuffer (38) weiterverarbeitet werden.

4. Verfahren nach einem der Ansprüche 1 bis 3, wobei der Adress-Wert weniger Datenbits aufweist als der Identifizierer der Botschaft.

5. Verfahren nach einem der vorhergehenden Ansprüche, wobei eine Anzahl einzigartiger Adresswerte mit einer Anzahl von Indexwerten übereinstimmt.

6. Netzwerk (10), das zur Durchführung eines Verfahrens gemäß einem der Ansprüche 1 bis 5 ausgelegt ist.

7. Landwirtschaftliches Fahrzeug mit einem Netzwerk nach Anspruch 6.

## Claims

1. A method of exchanging messages in a network (10) with a plurality of electronic control units (12-30), which are connected to each other by a bus (31) and exchange messages with each other, each message comprising a section with an identifier and data, with the following steps performed by the electronic control units (12-30):
receiving a message;
converting the identifier of the message into an address value, in which an arithmetic operation is performed;
reading out a relevance value from a table (36) in which relevance values are stored for a plurality of index values, wherein the relevance value of the index value which corresponds to the current address value is derived from the table (36);
ignoring the message when the corresponding relevance value indicates that the message is not relevant for the electronic control unit (12-30) in question;
further processing the message when the corresponding relevance value indicates that the message is relevant for the electronic control unit (12-30) in question.

2. A method according to claim 1, wherein the message is stored in a buffer memory (38) when the corresponding relevance value indicates that the message is relevant for the control unit (12-30) in question and is as a rule further processed later.

3. A method according to claim 2, wherein only selected messages are further processed from the buffer memory (38).

4. A method according to any of claims 1 to 3, wherein the address value has fewer data bits than the identifier of the message.

5. A method according to any of the preceding claims, wherein a number of unique address values coincides with a number of index values.

6. A network (10) which is designed to implement a method according to any of claims 1 to 5.

7. An agricultural vehicle with a network according to claim 6.

## Revendications

1. Procédé pour l'échange de messages dans un réseau (10) avec une pluralité d'unités de commande électroniques (12-30) qui sont reliées les unes aux autres par un bus (31) et qui échangent entre elles des messages qui comprennent chacun un segment avec un identifiant et des données, avec les étapes suivantes exécutées par les unités de commande électroniques (12-30) :
réception d'un message ;
conversion de l'identifiant du message en une valeur d'adresse par l'exécution d'une opération arithmétique ;
lecture d'une valeur de pertinence à partir d'une table (36) dans laquelle des valeurs de pertinence sont mémorisées pour une pluralité de valeurs d'index, la valeur de pertinence de la valeur d'index qui correspond à la valeur d'adresse respective étant tirée de la table (36) ;
non prise en compte du message lorsque la valeur de pertinence correspondante indique que le message n'est pas pertinent pour l'unité de commande électronique concernée (12-30) ;
traitement complémentaire du message lorsque la valeur de pertinence correspondante indique que le message est pertinent pour l'unité de commande électronique concernée (12-30).

2. Procédé selon la revendication 1, dans lequel le message est mémorisé dans une mémoire tampon (38) lorsque la valeur de pertinence correspondante indique que le message est pertinent pour l'unité de commande électronique concernée (12-30) et est généralement traité ultérieurement.

3. Procédé selon la revendication 2, dans lequel seuls les messages provenant de la mémoire tampon (38) sont traités.

4. Procédé selon l'une quelconque des revendications 1 à 3, dans lequel la valeur d'adresse comprend moins de bits de données que l'identifiant du message.

5. Procédé selon l'une quelconque des revendications précédentes, dans lequel un nombre de valeurs d'adresse uniques coïncide avec un nombre de valeurs d'index.

6. Réseau (10) qui est conçu pour la mise en oeuvre d'un procédé selon l'une quelconque des revendications 1 à 5.

7. Véhicule agricole avec un réseau selon la revendication 6.
